# FASCICULE DE BREVET EUROPEEN

(11) **EP 2 555 868 B1**
(45) Date de publication et mention de la délivrance du brevet: **07.11.2018**
(21) Numéro de dépôt: 11719338.3
(22) Date de dépôt: 06.04.2011
(51) Int. Cl.: B01J 31/18, C02F 1/72, C02F 101/12, C02F 101/14

(54) **PROCEDE DE TRAITEMENT D'EFFLUENTS COMPRENANT DES COMPOSES HALOGENES**
VERFAHREN ZUR BEHANDLUNG VON ABWÄSSERN MIT HALOGENIERTEN VERBINDUNGEN
METHOD OF TREATING EFFLUENTS CONTAINING HALOGENATED COMPOUNDS

(30) Priorité: 07.04.2010 FR 1052626
(43) Date de publication de la demande: 13.02.2013
(73) Titulaire: Centre National de la Recherche Scientifique (C.N.R.S.), 75016 Paris (FR); Université Claude Bernard Lyon I, 69100 Villeurbanne (FR)
(72) Inventeur: SOROKIN, Alexander, F-69270 Fontaine St Martin (FR); KUDRIK, Evgeny, V., F-69100 Villeurbanne (FR)
(74) Mandataire: Lavoix
(86) Numéro de dépôt international: PCT/FR2011/050771
(87) Numéro de publication internationale: WO 2011/124843

(56) Documents cités:
- US-A- 5 877 389
- AFANASIEV, P. ET AL: "Stable N-bridged diiron(IV) phthalocyanine cation radical complexes: synthesis and properties", DALTON TRANSACTION, 7 octobre 2009 (2009-10-07), pages 9828-9836, XP002609787,
- MEUNIER, B. ET AL.: "Oxidation of pollutants catalyzed by metallophthalocyanines", ACCOUNTS OF CHEMICAL RESEARCH, vol. 30, no. 11, 1997, pages 470-476, XP002609789,
- SOROKIN, A. ET AL: "Efficient oxidative dechlorination and aromatic ring cleavage of chlorinated phenols catalyzed by Iron sulfophthalocyanine", SCIENCE, vol. 268, 26 mai 1995 (1995-05-26), pages 1163-1166, XP002648344,
- SOROKIN, A. ET AL.: "Selective oxidation of aromatic compounds with dioxygen and peroxides catalyzed by phthalocyanine supported catalysts", JOURNAL OF MOLECULAR CATALYSIS A: CHEMICAL, vol. 182-183, 2002, pages 267-281, XP002609791,

## Description

La présente invention a pour objet un procédé de traitement d'effluents comprenant des composés halogénés, ce procédé comprenant une étape d'oxydation catalytique.

Les composés halogénés sont largement utilisés dans de nombreuses applications. Cependant, ces composés sont très difficilement biodégradables en raison de la stabilité élevée des liaisons carbone-halogène. L'accumulation de ces composés nocifs dans la nature pose un problème environnemental très important.

Parmi les composés les plus stables et inertes chimiquement, on peut notamment citer les composés fluorés et les chlorofluorocarbones (CFC ou fréons), bien connus pour leur responsabilité dans la destruction de la couche d'ozone et dont la durée de vie est extrêmement longue. Actuellement, environ 40% des produits utilisés dans l'agriculture et 20% des médicaments contiennent du fluor (V.V. Grushin, Acc. Chem. Res. 43, 160-171 (2010)). Le développement de procédés efficaces et économiques de traitement de ces composés est d'une importance vitale.

Les méthodes actuelles de transformation des liaisons carbone-halogène sont basées sur l'activation organométallique et sur la réduction. L'activation des liaisons carbone-fluor par ces exemples a notamment fait l'objet d'une revue (Chem. Rev., 109, 2119-2183 (2009)), mais ces travaux ne concernent que des molécules peu fluorées. De plus, la transformation des composés fluorés par l'activation organométallique nécessite des catalyseurs difficilement accessibles, surtout à grande échelle, ainsi que des conditions strictement anhydres et inertes. B. Meunier, Acc. Chem. Res. 30, 470-476, 1997 décrit l'oxydation de 2,4,6-trichlorophénol en presence d'un complexe mononucléaire de fer, le tétrasulfophtalocyanine (FePcS).

Il n'existe pas à ce jour de système chimique catalytique capable de dégrader des composés hautement halogénés, en particulier des composés fluorés, par voie d'oxydation dans des conditions douces.

Pendant longtemps, on a donc compté sur la dégradation naturelle des composés halogénés par des micro-organismes pour résoudre les problèmes environnementaux posés par ces composés. Néanmoins, la biodégradation s'avère souvent insuffisante surtout dans le cas de composés aromatiques hautement halogénés extrêmement stables. Actuellement, l'approche industrielle pour traiter ce type de composés est l'incinération à haute température.

Il apparaît donc qu'en matière de traitement de composés halogénés, une alternative efficace, propre et peu coûteuse fasse toujours défaut.

Un des buts de la présente invention est de fournir un procédé de dégradation de composés halogénés, particulièrement difficiles à oxyder, de façon aussi économique que possible et en satisfaisant aux objectifs de sauvegarde de l'environnement.

Elle a également pour but de fournir un procédé effectué dans des conditions douces et économes en énergie, mettant en oeuvre un catalyseur tolérant vis-à-vis de l'eau et de l'air, ainsi qu'un oxydant propre et non toxique.

La présente invention a également pour but de permettre la dégradation de composés halogénés réputés stables et nocifs des effluents industriels (en phase organique ou aqueuse) ou des eaux usées.

La présente invention concerne l'utilisation de catalyseurs de formule générale (I) :

(I) (L₁)M₁-X-M₂(L₂)

tels que définis dans les revendications annexées, pour l'oxydation catalytique de composés halogénés.

L'utilisation de tels catalyseurs pour oxyder des composés hautement halogénés n'avait jusqu'à présent jamais été envisagée car ces composés, pauvres en électrons en raison de la grande électronégativité des halogènes (en particulier celle du chlore et surtout du fluor), sont extrêmement difficiles à oxyder. Il n'existe jusqu'à présent pas de système catalytique permettant l'oxydation de liaisons carbone-fluor en conditions douces.

Dans le cadre de l'invention, on entend par « dégradation » une réaction consistant à rompre une ou plusieurs liaisons d'une molécule, ce qui brise souvent cette molécule en plusieurs molécules plus petites. La dégradation de composés halogénés désigne en particulier la rupture des liaisons carbone-halogène desdits composés halogénés pour obtenir notamment des anions halogénures.

Dans le cadre de l'invention, on entend par «composés halogénés» des composés organiques substitués par au moins un atome d'halogène, en particulier des atomes de fluor, de chlore, de brome et d'iode, et plus particulièrement de fluor et de chlore. On entend aussi par composés halogénés des composés organiques en C₅-C₃₀ comportant au moins un cycle aromatique ou hétéroaromatique, ledit cycle étant substitué par au moins un atome d'halogène (composés aromatiques halogénés), ou également des composés substitués par plusieurs atomes d'halogènes (composés polyhalogénés). Parmi ces composés halogénés, on peut notamment citer la tetrafluoro-1,4-benzoquinone (fluoranil), des phényles substitués par des atomes de fluor et/ou de chlore (par exemple pentafluorophénol, hexafluorobenzène, octafluorotoluène, octafluoronaphtalène, 1,3,5-trichloro-2,4,6-trifluoro-benzene, trichlorophénol, hexachlorobenzène, dichlorobenzène, les polychlorodibenzo-p-dioxines, les polychlorodibenzo-furanes et les polychlorobiphényles), des pyridines substituées par des atomes de fluor et/ou de chlore (par exemple pentafluoropyridine, pentachloropyridine).

On entend aussi par composés halogénés des composés organiques aliphatiques en C₁-C₁₀ comportant au moins un atome d'halogène (composés aliphatiques halogénés), ou également des composés substitués par plusieurs atomes d'halogènes (composés aliphatiques polyhalogénés). Parmi ces composés halogénés, on peut notamment citer le dichlorométhane, le chloroforme, le 1,1,1-trichloroéthane, et de manière générale les solvants halogénés volatiles, en particulier les solvants chlorés volatiles.

Dans le cadre de l'invention, on entend par «atomes d'halogènes» les éléments Cl, F, Br et I, et plus particulièrement Cl et F.

Dans le cadre de l'invention, on entend par «anions halogénures» les anions Cl⁻, F⁻, Br⁻ et I⁻, et plus particulièrement Cl⁻, F⁻.

A cet effet, l'invention propose d'utiliser des catalyseurs binucléaires métalliques à ligands macrocycliques tétradentates de formule générale (I) en présence d'un oxydant.

Dans le cadre de la présente invention, les inventeurs ont observé de façon tout à fait inattendue l'efficacité de tels catalyseurs en présence d'un oxydant dans des réactions d'oxydation de composés halogénés.

Dans le cadre de l'invention, on entend par «atomes métalliques» les éléments correspondant aux métaux de transition dans leurs différents états d'oxydation (nombre d'oxydation positif).

Ainsi, les catalyseurs de l'invention de formule générale (I) sont également nommés « catalyseurs binucléaires métalliques ».

Dans le cadre de l'invention, on entend par « catalyseur binucléaire métallique » un édifice polyatomique constitué de deux cations ou atomes métalliques, chaque cation ou atome métallique (désigné également cation ou atome central) étant entouré d'un ligand qui délocalise une partie de sa densité électronique sur le cation ou l'atome, formant ainsi des liaisons chimiques avec celui-ci. On parle alors de coordination entre le ligand et l'atome ou le cation central, l'ensemble ligands-métaux constituant un complexe organométallique de coordination.

On entend par «ligand macrocyclique tétradentate» ou ligand tétradentate une macromolécule cyclique portant des fonctions chimiques lui permettant de se lier à un atome ou cation central tel que défini ci-dessus. On dit que les fonctions chimiques sont coordinées à l'atome ou au cation central.

L'atome X réalise un pont entre les deux atomes métalliques. Dans le cadre de l'invention, ce type de complexe est appelé de type µ. X représente un atome d'azote, on parle de complexe µ-nitrido.

Dans le cadre de l'invention, on entend par «oxydation catalytique» une réaction d'oxydation catalysée par l'action d'une substance appelée catalyseur qui modifie la vitesse de la réaction. Le catalyseur est en quantité beaucoup plus faible que les réactifs, n'est pas consommé et est retrouvé inchangé à la fin de la réaction.

Dans le cadre de la présente invention, on entend par « catalyseur » une espèce chimique qui, dans un état initial, interagit avec les réactifs d'une réaction chimique pour accélérer la formation des produits de cette réaction, et qui se retrouve dans le même état initial à la fin de la réaction.

La dégradation par oxydation catalytique des composés halogénés convertit ces composés difficilement biodégradables et/ou toxiques en composés oxydés biodégradables et/ou non toxiques. Lors de cette dégradation, les liaisons carbone-halogène desdits composés halogénés sont rompues pour donner d'une part un composé organique oxydé et d'autre part un ou plusieurs anions halogénures portant chacun une charge négative. La transformation d'halogènes organiques en halogènes inorganiques est appelée «minéralisation» ; on dit aussi que les composés halogénés ainsi traités sont minéralisés.

La présente invention concerne en particulier l'utilisation de catalyseurs tels que décrits précédemment de formule générale (I) pour l'oxydation catalytique de composés aromatiques halogénés.

Dans le cadre de l'invention, on entend par «composés aromatiques halogénés» des composés organiques comportant au moins un cycle aromatique ou hétéroaromatique, ledit cycle étant substitué par au moins un atome d'halogène (composés aromatiques halogénés), en particulier des atomes de fluor, de chlore, de brome et d'iode, et plus particulièrement de fluor et de chlore. Ces composés sont particulièrement stables et difficiles à dégrader.

La dégradation par oxydation catalytique des composés halogénés aromatiques convertit ces composés très difficilement biodégradables et/ou toxiques en composés oxydés non-aromatiques, qui sont plus facilement biodégradables et/ou non toxiques.

La présente invention concerne aussi l'utilisation de catalyseurs tels que décrits précédemment pour l'oxydation catalytique de composés aliphatiques halogénés.

Dans le cadre de l'invention, on entend par «composés aliphatiques halogénés» des composés organiques aliphatiques comportant au moins un atome d'halogène, en particulier des atomes de fluor, de chlore, de brome et d'iode, et plus particulièrement de fluor et de chlore, avantageusement de chlore. Ces composés sont particulièrement stables et difficiles à dégrader.

La dégradation par oxydation catalytique des composés halogénés aliphatiques convertit ces composés très difficilement biodégradables et/ou toxiques en composés oxydés non-halogénés, qui sont plus facilement biodégradables et/ou non toxiques.

Selon un mode de réalisation particulier de l'invention, lesdits catalyseurs sont utilisés pour le traitement d'effluents comprenant des composés halogénés.

Dans le cadre de l'invention, on entend notamment par «effluents» les eaux usées, aussi appelées eaux polluées, c'est-à-dire toutes les eaux qui sont de nature à contaminer les milieux dans lesquelles elles sont déversées. Ces eaux sont en général le sous-produit d'une utilisation humaine domestique, industrielle, artisanale, agricole ou autre. Elles sont considérées comme polluées et doivent être traitées.

On entend également par effluents toutes les phases organiques constituant les déchets industriels, contenant des composés toxiques qu'il est nécessaire de traiter.

La présente invention a ainsi pour but de traiter les composés halogénés contenus dans ces deux types d'effluents (notamment effluents industriels), que ce soit en phase aqueuse ou organique.

Selon un mode de réalisation particulier de l'invention, ladite oxydation est effectuée en présence d'H₂O₂ à titre d'oxydant.

Le peroxyde d'hydrogène (H₂O₂), communément appelé eau oxygénée, est un composé chimique aux puissantes propriétés oxydantes. Sa concentration est parfois indiquée en %, une solution standard à 35 % correspondant à environ 11.4 M. L'eau oxygénée présente l'avantage d'être un oxydant propre, bon marché et largement utilisé dans l'industrie (appellation industrielle : perhydrol). En effet, le produit de réduction de H₂O₂ réagissant en tant qu'oxydant est H₂O :

H₂O₂+2H⁺+2e⁻→2H₂O

De plus, la réaction de dismutation de H₂O₂ est lente et les solutions aqueuses de peroxyde d'hydrogène peuvent être conservées longtemps.

Selon un mode de réalisation particulier de l'invention, lesdits catalyseurs sont de formule (I) telle que décrite précédemment, dans laquelle :
- M₁ et M₂, identiques ou différents, représentent un atome choisi dans le groupe constitué des métaux de transition, notamment fer, cuivre, ruthénium, manganèse, chrome, vanadium, osmium et cobalt ;
- X représente un atome d'azote ;
- L₁ et L₂, identiques ou différents, répondent à la formule générale (II) : 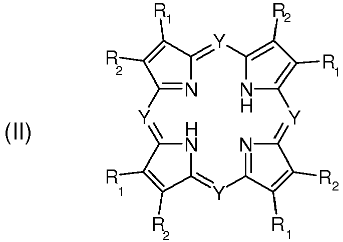 dans laquelle :
   - R₁ et R₂ représentent indépendamment l'un de l'autre un groupe choisi dans le groupe constitué de : H, phényle, alkyle et halogène ;
      ou bien forment, avec les deux atomes de carbone auxquels ils sont liés, un groupe phényle ou un hétérocycle contenant un ou deux atomes d'azote, éventuellement substitué par un ou plusieurs substituants choisis dans le groupe constitué de halogène, alkyle, alkoxy, nitro, carboxyle, hydroxyle, sulfone, sulfonique et sulfonate ;
   - Y représente un atome d'azote ou un groupe CR, où R représente un atome d'hydrogène ou un substituant choisi dans le groupe constitué de : halogène, alkyle, phényle, éventuellement substitué par un ou plusieurs substituants choisis dans le groupe constitué de halogène, alkyle, alkoxy, nitro, carboxyle, hydroxyle, sulfone, sulfonique et sulfonate.

Les ligands L₁ et L₂ ainsi définis sont des ligands de type « porphyrine ».
Dans la formule (II), quand Y = CR et R₁ et R₂ représentent indépendamment l'un de l'autre un groupe choisi dans le groupe constitué de : H, nitro et halogène, on parle de porphyrines.
Dans la formule (II), quand Y = CR et R₁C=CR₂ = Ph, on parle de tetrabenzoporphyrines. Dans la formule (II), quand Y = N et R₁ = R₂ = H, on parle de porphyrazines.
Dans la formule (II), quand Y = N et R₁C=CR₂ = Ph, on parle de phtalocyanines.

Selon un mode de réalisation préféré de l'invention, Y = C-Ph et R₁ et R₂ représentent tous deux des atomes d'hydrogène (µ-nitrido dimère de tetraphénylporphyrine du fer, noté (FeTPP)₂N).

Dans le cadre de l'invention, les atomes M₁ et M₂ sont considérés dans leurs différents états d'oxydation (nombre d'oxydation positif).

Dans le cadre de l'invention, on entend par «alkyle» une chaîne alkyle saturée, de type linéaire ou ramifiée, comprenant de 1 à 18 atomes de carbone.

Dans le cadre de l'invention, on entend par «alkoxy» une chaîne alkyle saturée comprenant de 1 à 18 atomes de carbone, liée à un atome d'oxygène.

Selon un mode de réalisation particulier de l'invention, les catalyseurs sont de formule (I) telle que décrite précédemment, dans laquelle :
- M₁ et M₂ représentent tous deux un atome de fer ;
- R₁ et R₂ forment, avec les deux atomes de carbone auxquels ils sont liés, un groupe phényle, éventuellement substitué par un ou plusieurs substituants choisis dans le groupe constitué de halogène, alkyle, alkoxy, nitro, carboxyle, hydroxyle, sulfone, sulfonique et sulfonate ;
- Y représente un atome d'azote.

Dans le cadre de l'invention, un atome de fer est considéré dans ses différents états d'oxydation (nombre d'oxydation positif).

Dans ce mode préféré de l'invention, les ligands sont de type phtalocyanines (Pc), composés de faible coût et facilement accessibles à l'échelle industrielle. Les catalyseurs µ-nitrido phtalocyanines binucléaires de fer sont alors notés (FePc)₂N. Les premiers complexes de ce type ont été synthétisés en 1985 (Ercolani et al. Inorg. Chem., 24, 3733-3737 (1985)). Ces complexes sont stables en présence d'eau, d'air et même d'oxydants forts comme H₂O₂ par exemple, mais n'ont jamais été évoqués comme catalyseur d'oxydation.

Selon un mode de réalisation préféré de l'invention, R₁ et R₂ forment, avec les deux atomes de carbone auxquels ils sont liés, un groupe phényle substitué par des atomes d'hydrogène (complexe noté (FePc)₂N), par des groupes alkyles, en particulier par des tert-butyles (complexe noté (FePc^{t}Bu₄)₂N) ou par des groupes sulfoniques -SO₃H (complexe noté (FePcS)₂N).

La présente invention concerne le procédé de traitement d'effluents comprenant des composés halogénés, comprenant l'oxydation des composés halogénés en présence d'un oxydant et d'un catalyseur de formule générale (I) telle que définie précédemment.

Dans le cadre de l'invention, on entend par «oxydant» un composé organique ou minéral capable d'oxyder d'autres composés, c'est-à-dire de capter un ou plusieurs électrons de ces composés.

Parmi les oxydants minéraux usuels, on peut notamment citer les perchlorates, les hypochlorites, les nitrates, les chromates, les permanganates, en particulier Cl₂, Br₂, CrO₃, CrO₂Cl₂, K₂Cr₂O₇, Ca(OCl)₂, HClO₄, HNO₃, KMnO₄, K₂O₂, N₂O₄, Na₂O₂, F₂O₂, I₂O₇, RuO₄, AgClO₄, O₂, O₃, H₂O₂.

Parmi les oxydants organiques usuels, on peut notamment citer le m-CPBA, les complexes SO₃•py, chlorochromate de pyridinium (PCC) et dichromate de pyridinium (PDC), la 2,3-dichloro-5,6-dicyano-1,4-benzoquinone (DDQ), le periodinane de Dess-Martin et l'acide iodoxybenzoïque (IBX).

Selon un mode particulier de l'invention, le procédé susmentionné comprend les étapes suivantes :
(a) mise en présence des effluents, d'un oxydant et d'un catalyseur de formule (I) telle que définie précédemment ; et
(b) oxydation catalytique desdits composés halogénés pour obtenir des composés oxydés.

Des étapes supplémentaires de récupération et de recyclage du catalyseur peuvent également être mises en oeuvre. Le catalyseur qui est un catalyseur hétérogène peut être récupéré par filtration par exemple.

Les composés oxydés peuvent si besoin être récupérés afin d'être traités par des méthodes classiques de traitement des déchets.

Dans le cadre de l'invention, on entend par mise en présence de différents réactifs le fait de mettre en contact lesdits réactifs dans un même réacteur pour obtenir un mélange homogène ou hétérogène dans lequel a lieu la réaction chimique entre lesdits réactifs.

Le procédé permet de traiter des effluents organiques (traitement de déchets industriels) ou des effluents aqueux (traitement des eaux usées).

Selon un mode de réalisation préféré, l'oxydant mis en oeuvre dans le procédé de la présente invention est H₂O₂.

Selon un mode particulier de l'invention, ledit catalyseur est de formule (I) telle que décrite précédemment, dans laquelle :
- M₁ et M₂ représentent tous deux un atome de fer ;
- R₁ et R₂ forment, avec les deux atomes de carbone auxquels ils sont liés, un groupe phényle, éventuellement substitué par un ou plusieurs substituants choisis dans le groupe constitué de halogène, alkyle linéaire ou ramifié, alkoxy, nitro, carboxyle, hydroxyle, sulfone, sulfonique et sulfonate ;
- Y représente un atome d'azote.

Selon un mode particulier de l'invention, lesdits effluents contiennent des composés aromatiques halogénés, de préférence des composés aromatiques fluorés.

On entend par composés aromatiques halogénés des composés comportant des cycles aromatiques ou hétéroaromatiques, lesdits cycles étant substitués par au moins un atome d'halogène (en particulier chlore ou fluor).

De préférence ces composés sont polyhalogénés, c'est-à-dire qu'ils comprennent au moins deux atomes d'halogènes (de préférence chlore ou fluor).

Selon un mode de l'invention, lesdits effluents contiennent des composés polyfluorés, de préférence des composés aromatiques polyfluorés.

A titre de composés polyfluorés pouvant être traités par les catalyseurs de l'invention, on peut citer par exemple le pentafluorophénol, le fluoranil, l'hexafluorobenzène, la pentafluoropyridine, l'octafluorotoluène et l'octafluoronaphtalène.

Selon un mode de l'invention, lesdits effluents contiennent des composés polychlorés, de préférence des composés aromatiques polychlorés.

A titre de composés polychlorés pouvant être traités par les catalyseurs de l'invention, on peut citer par exemple le 2,4,6-trichlorophénol, le dichlorobenzène et l'hexachlorobenzène.

On peut également citer les polychlorodibenzo-p-dioxines (PCDD, aussi appelées dioxines), comme par exemple la 2,3,7,8-tétrachlorodibenzo-p-dioxine, les polychlorodibenzo-furanes (PCDF) et les polychlorobiphényles (PCB), qui sont connus comme étant des polluants très toxiques et résistants aux méthodes de traitement et de dégradation usuelles.

Selon un mode de l'invention, lesdits effluents contiennent des composés polychlorés et polyfluorés, de préférence des composés aromatiques polychlorés et polyfluorés.

A titre de composés polychlorés et polyfluorés pouvant être traités par les catalyseurs de l'invention, on peut citer par exemple le 1,3,5-trichloro-2,4,6-trifluoro-benzène.

Selon un mode de l'invention, lesdits effluents ne contiennent pas de solvants halogénés.

Dans le cas d'effluents contenant des solvants halogénés, comme par exemple CH₂Cl₂ (T_{eb} = 40°C sous 1 atm), CHCl₃ (62°C), CCl₄ (77°C), du trichloroéthylène (87°C) ou du chlorobenzène (132°C), ceux-ci sont au préalable éliminés des effluents avant le traitement par ledit procédé, notamment par évaporation sous pression réduite.

Selon un autre mode de l'invention, lesdits effluents contiennent des solvants halogénés, comme par exemple des solvants chlorés aliphatiques.

A titre de solvants chlorés aliphatiques pouvant être traités par les catalyseurs de l'invention, on peut citer par exemple le dichlorométhane, le chloroforme et le 1,1,1-trichloroéthane.

Selon un mode particulier de l'invention, ledit «catalyseur est supporté», de préférence sur de la silice, de l'oxyde d'aluminium ou du charbon.

Dans le cadre de l'invention, on entend par catalyseur supporté un catalyseur immobilisé à la surface d'une substance organique (polymère) ou inorganique, en particulier de la silice, de l'oxyde d'aluminium ou du charbon, qu'on appelle support.

Un catalyseur supporté est un catalyseur hétérogène qui se trouve à l'état solide, alors que la phase réactive dudit procédé est une solution (mélange des effluents et de l'oxydant). Les réactifs se fixent sur la surface du catalyseur où a lieu la réaction. On cherche donc à maximiser la surface spécifique du catalyseur supporté.

Les catalyseurs hétérogènes supportés sur des supports inorganiques sont alors facilement récupérables, par exemple par filtration, pour être ensuite réutilisés et/ou recyclés. Lesdits catalyseurs peuvent être mis en oeuvre pour le traitement d'effluents organiques (traitement de déchets industriels) ou d'effluents aqueux (traitement des eaux usées).

Selon un mode de réalisation préféré de l'invention, le rapport entre la quantité du catalyseur (en mol) et la quantité des composés halogénés (en mol) est inférieur à 0,1, de préférence inférieur à 0,01.

On cherche en effet à minimiser la quantité de catalyseur afin de réduire le coût du procédé. On estime qu'un catalyseur est réellement en « quantité catalytique » quand il est présent dans une proportion inférieure à 5%, de préférence inférieure à 1%, par rapport aux réactifs.

Selon un mode particulier de l'invention, le rapport entre la quantité de l'oxydant (en mol) et la quantité des composés halogénés (en mol) est inférieur à 10 000, de préférence inférieur à 100.

On cherche en effet à minimiser la quantité d'oxydant afin de réduire le coût du procédé. Cette quantité dépend de la concentration en composés halogénés des effluents. Pour des effluents concentrés, l'excès en oxydant sera relativement faible. Pour des effluents très peu concentrés, l'excès en oxydant sera plus important.

Selon un mode particulier de l'invention, ladite étape (b) est effectuée à une température comprise de 10 °C à 100 °C, plus particulièrement entre 20 °C et 60 °C.

Les conditions du procédé sont donc douces (20-60 °C) et économes en énergie.

Selon un mode particulier de l'invention, la durée de ladite étape (b) est comprise de 30 min à 24 h.

Cette durée varie en fonction des composés halogénés. On cherche cependant à la minimiser pour augmenter l'efficacité du procédé.

L'invention sera encore davantage illustrée au vu des exemples décrits ci-après.

### EXEMPLES

### Préparation des catalyseurs

Les catalyseurs (FePc^{t}Bu₄)₂N, (FePc)₂N et (FeTPP)₂N, utilisés dans les exemples suivants ont été obtenus selon un procédé comprenant les étapes suivantes (cf. J. Am. Chem. Soc. 98, 1747-1752 (1976); Chem. Commun. 2562-2564, (2008); Inorg. Chem., 24, 3733-3737 (1985)) :
- addition de NaN₃ à une solution de phtalocyanine ou de porphyrine de fer dans un solvant de haut point d'ébullition (par exemple du xylène) pour obtenir un mélange,
- chauffage à reflux du mélange sous agitation et sous atmosphère inerte (par exemple sous argon),
- filtration du mélange,
- purification du complexe contenu dans le filtrat, de préférence par chromatographie, de préférence sur alumine neutre (Al₂O₃).

Le complexe (FePcS)₂N représente un mélange de plusieurs complexes sulfonés, avec différents taux de sulfonation des phtalocyanines. Ce complexe a été obtenu par chauffage de dimère (FePc)₂N dans de l'acide chlorosulfonique à 150 °C pendant 6 h. Le mélange réactionnel a ensuite été versé dans la glace et le précipité formé a été isolé par filtration puis lavé avec de l'eau. Le solide a ensuite été séché à 70 °C. Les groupements -SO₂Cl s'hydrolysent spontanément en groupements sulfoniques -SO₃H, de sorte qu'on obtient un mélange de complexes sulfonés solubles dans l'eau, comportant chacun entre 2 et 8 groupements sulfoniques -SO₃H. Ce mélange est noté (FePcS)₂N.

### Exemple 1

L'oxydation en catalyse homogène a été réalisée avec le catalyseur (FePc^{t}Bu₄)₂N et avec H₂O₂ comme oxydant, dans l'acétonitrile pendant 3h à 60 °C, avec [(FePc^{t}Bu₄)₂N] = 0,2 mM, [composé fluoré] = 0,1 M et [H₂O₂] = 0,4 M, soit le rapport (catalyseur/substrat/oxydant) = (1/500/2000).
Les résultats d'oxydation de différents composés fluorés sont rassemblés dans le Tableau 1.

**Tableau 1. Oxydation de composés fluorés en catalyse homogène (CH₃CN, 3h, 60 °C)**

| Substrat Composé halogéné | Conversion, % | TON | F⁻ inorganique par substrat converti | Produits identifiés |
|---|---|---|---|---|
| Pentafluorophénol | 47 | 235 | 3,4 | F⁻, fluoranil |
| | 88 (20 °C, 24h) | 440 | 4,2 | |
| Fluoranil | 44 (1h) | 220 | 3,6 | F⁻ |
| Hexafluorobenzène | 26 | 130 | 4,6 | F⁻, fluoranil pentafluorophénol |
| | 49 (sous Ar) | 245 | 2,9 | |
| Pentafluoropyridine | 19 | 95 | 2,8 | F⁻, phénols, N-oxyde |
| Octafluorotoluène | 22 | 110 | 3,5 | F⁻ heptafluorocrésols |

Le TON (Turn-Over Number) est le nombre de moles de substrat qu'une mole de catalyseur peut convertir pendant le temps de la réaction. Plus un TON est élevé, plus le catalyseur est performant.

### Exemple 2

L'oxydation en catalyse homogène du pentafluorophénol a été réalisée avec le catalyseur (FePcS)₂N et avec H₂O₂ comme oxydant, dans l'eau pendant 6h à 60 °C, avec [(FePcS)₂N] = 0,2 mM, [pentafluorophénol] = 0,2 M et [H₂O₂] = 0,8 M, soit le rapport (catalyseur/substrat/oxydant) = (1/1000/4000).

La conversion de la réaction est de 42% (TON = 420). Chaque molécule de pentafluorophénol transformée a donné 4,6 anions fluorures inorganiques. Les anions fluorures ont été le principal produit d'oxydation et l'acide difluoromaléique a été le produit minoritaire. Chaque molécule de catalyseur transforme 1925 atomes de fluor organique en fluor inorganique.

Les catalyseurs supportés utilisés dans les exemples suivants ont été obtenus selon un procédé comprenant les étapes suivantes (cf. J. Porphyrins Phtalocyanines, 12, 1078-1089 (2008)) :
- mise en présence du complexe catalyseur et du support dans du dichlorométhane, pour obtenir un mélange,
- agitation du mélange à température ambiante,
- évaporation du solvant sous pression réduite, pour obtenir un solide,
- séchage sous vide du solide.

### Exemple 3

L'oxydation en catalyse hétérogène du pentafluorophénol (0,4 mmol) a été réalisée avec le catalyseur (FePc)₂N supporté sur charbon ou sur silice (36 mg) et avec H₂O₂ (1,6 mmol) comme oxydant, dans D₂O, à 60 °C et sous atmosphère d'air, la réaction étant suivie par ¹⁹F RMN.

L'analyse de la solution réactionnelle par ¹⁹F RMN après 14h a montré une conversion de pentafluorophénol de 87 %, un taux de minéralisation de 93% (fluorure après réaction/fluor organique initial) et un TON de 809 cycles par molécule de catalyseur. Chaque molécule de catalyseur transforme 3762 atomes de fluor organique en fluor inorganique.

### Exemple 4

L'oxydation en catalyse hétérogène de l'hexafluorobenzène (0,018 mmol) a été réalisée avec le catalyseur (FePc)₂N supporté sur charbon (30 mg) et avec H₂O₂ (1,6 mmol) comme oxydant, dans 2mL d'une solution à 0,1 M d'acide sulfurique, à 60 °C et sous atmosphère d'air, la réaction étant suivie par ¹⁹F RMN.

L'analyse de la solution réactionnelle par ¹⁹F RMN après 14h a montré une conversion d'hexafluorobenzène de 94 % et un taux de minéralisation de 82% (fluorure après réaction/fluor organique initial).

### Exemple 5

L'oxydation en catalyse hétérogène de différents composés polyfluorés a été réalisée en présence de catalyseurs (FePc)₂N ou (FePc^{t}Bu₄)₂N supportés sur charbon et avec H₂O₂ comme oxydant, dans l'eau (2 mL) et à 60°C comme indiqué dans le Tableau 2.

Le premier cas imite les effluents industriels qui contiennent des polluants hautement halogénés en forte concentration (pentafluorophénol, 0,1 M).

Le deuxième cas montre que ce système peut être utilisé pour traiter de faibles concentrations de ces polluants récalcitrants que l'on trouve dans les eaux usées (hexafluorobenzène 0,009 M).

Les résultats sont rassemblés dans le Tableau 2.

**Tableau 2. Oxydation de composés polyfluorés en catalyse hétérogène**

| | | | | |
|---|---|---|---|---|
| Composés polyfluorés, (concentration initiale) | 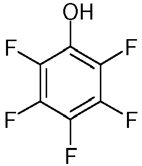 | 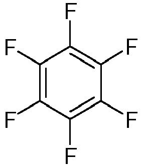 | 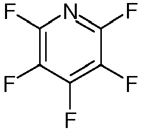 | 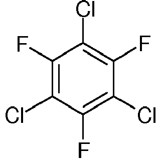 |
| | (0,1 M) | (0,009 M) | (0,05 M) | (0,1 M dans MeCN) |
| Catalyseur, quantité | (FePc^{t}Bu₄)₂N 20 mg | (FePc)₂N 30 mg | (FePc)₂N 30 mg | (FePc^{t}Bu₄)₂N 24 mg |
| [H₂O₂] | 2,6 M | 0,82 M | 0,82 M | 1,6 M |
| Conversion | 99% | 94% | 46% | 89% |
| TON | 990 | 47 | 126 | 307 |

### Exemple 6

L'oxydation en catalyse hétérogène du pentafluorophénol (0,3 mmol) a été réalisée avec le catalyseur (FeTPP)₂N (TPP = tetraphénylporphyrine) supporté sur silice (30 mg) et avec H₂O₂ (1,14 mmol) comme oxydant, dans D₂O (3 mL), à 60°C et sous atmosphère d'air, la réaction étant suivie par ¹⁹F RMN.

L'analyse de la solution réactionnelle par ¹⁹F RMN après 8h a montré une conversion de pentafluorophénol de 48 %, un taux de minéralisation de 29% (fluorure après réaction/fluor organique initial) et un TON de 240 cycles par molécule de catalyseur. Chaque molécule de catalyseur transforme 734 atomes de fluor organique en fluor inorganique.

### Exemple 7

L'oxydation du pentafluorophénol a été réalisée dans les conditions de l'exemple 3, mais en utilisant le catalyseur (FeTPP)₂N (TPP = tetraphénylporphyrine) supporté sur silice au lieu de (FePc)₂N.

L'analyse de la solution réactionnelle par ¹⁹F RMN après 14h a montré une conversion de pentafluorophénol de 65 %, un taux de minéralisation de 56 % (fluorure inorganique après réaction/fluor organique initial) et un TON de 431 cycles par molécule de catalyseur. Chaque molécule de catalyseur transforme 1870 atomes de fluor organique en fluor inorganique.

### Exemple 8

Le 2,4,6-trichlorophénol est un polluant réputé très récalcitrant qui se forme dans le procédé du blanchiment de la pâte à papier par le chlore. Précédemment, des complexes phtalocyanines de fer mononucléaires (Sorokin et al. Science, 268, 1163-1166 (1995)) et des complexes du fer avec un ligand macrocyclique tétra amido (FeTAML) (Gupta et al. Science, 296, 326-328 (2002)) ont été décrits pour oxyder ce polluant peu biodégradable.

L'oxydation en catalyse hétérogène du 2,4,6-trichlorophénol (2 mL d'une solution aqueuse à 2,13 mM, soit 0,004 mmol de composé chloré, contenant l'acide sulfurique à 0,1 M) a été réalisée avec le catalyseur (FePc)₂N supporté sur silice (20 mg, charge en complexe de 12 µmol/g) et avec H₂O₂ (0,4 mmol) comme oxydant, pendant 14 h à 60°C.

La conversion est totale et le taux de minéralisation (chlore inorganique après réaction/chlore organique initial) est de 95 %.

### Exemple 9

L'oxydation en catalyse homogène de l'octafluoronaphtalène a été réalisée avec le catalyseur (FePc^{t}Bu₄)₂N dans CD₃CN pendant 6h à 60°C, avec [(FePc^{t}Bu₄)₂N] = 0,2 mM, [octafluoronaphtalène] = 0.1 M et [H₂O₂] = 1 M, soit le rapport (catalyseur/substrat/oxydant) = (1/500/5000).

La conversion de l'octafluoronaphtalène est de 35 % (TON = 175). Les produits de dégradation déterminés par ¹⁹F RMN et GC-MS sont F⁻, l'acide difluoromaléique, l'acide difluorofumarique, l'acide tétrafluorophtalique, l'hexafluoro-1,4-naphtoquinone et des heptafluoronaphtols. Chaque molécule d'octafluoronaphtalène transformée a donné 2,03 anions fluorures inorganiques.

L'oxydation de l'octafluoronaphtalène a été réalisée dans des conditions plus diluées avec [(FePc^{t}Bu₄)₂N] = 0,1 mM, [octafluoronaphtalène] = 0.01 M et [H₂O₂] = 0,5 M, soit le rapport (catalyseur/substrat/oxydant) = (1/100/5000).

La conversion de l'octafluoronaphtalène est de 87 % (TON = 87). Chaque molécule d'octafluoronaphtalène transformée a donné 6,2 anions fluorures inorganiques.

### Exemple 10

L'oxydation en catalyse homogène de l'hexachlorobenzène a été réalisée avec le catalyseur (FePc^{t}Bu₄)₂N dans CH₃CN pendant 16h à 60 °C avec [(FePc^{t}Bu₄)₂N] = 0,05 mM, [hexachlorobenzène] = 0,001 M et [H₂O₂] = 0.1 M, soit le rapport (catalyseur/substrat/oxydant) = (1/20/2000).

La conversion de l'hexachlorobenzène est de 20 %. Chaque molécule d'hexachlorobenzène transformée a donné 3,05 anions chlorures inorganiques.

### Exemple 11

L'oxydation en catalyse hétérogène de l'o-dichlorobenzène (0.96 mM) a été réalisée avec le catalyseur (FePc^{t}Bu₄)₂N supporté sur charbon (30 mg) et avec H₂O₂ (1.6 mmol) comme oxydant, dans 2 mL d'eau à 60°C pendant 14h.

La conversion de l'o-dichlorobenzène est de 90 %. Chaque molécule d'o-dichlorobenzène transformée a donné 0,7 anions chlorures inorganiques. Les acides chloromaléique et dichloromaléique ont été détectés comme les produits de dégradation.

### Exemple 12

L'oxydation en catalyse hétérogène de composés aliphatiques chlorés (dichlorométhane (CH₂Cl₂), chloroforme (CHCl₃) et 1,1,1-trichloroéthane (CH₃CCl₃)) a été réalisée avec le catalyseur (FePc^{t}Bu₄)₂N supporté sur charbon (20 mg, charge en complexe de 10 µmol/g) en présence de H₂O₂ (0.5 M) comme oxydant, dans des solutions aqueuses contenant de faibles concentrations de substrats, pendant 24 h.

Les résultats des ces expériences sont rassemblés dans le Tableau 3 :

**Tableau 3. Oxydation de composés chlorés en catalyse hétérogène**

| Composé chloré | Concentration | T (°C) | Conversion (%) | TON | Produit(s) mM (rendement) |
|---|---|---|---|---|---|
| CH₂Cl₂ | 12.7 mM | 40 | 88 | 111 | HCOOH 9.3 mM (73 %) |
| CHCl₃ | 23.1 mM | 60 | 77 | 178 | HCOOH 18 mM (78 %) |
| CH₃CCl₃ | 10.7 mM | 60 | 74 | 79 | HCOOH 4.7 mM (44 %) CH₃COOH 0.7 mM (7 %) |

Le produit principal de dégradation du dichlorométhane et du chloroforme est l'acide formique (HCOOH), pour un rendement de 73 et 78% respectivement.

Le mélange d'acide formique (produit majoritaire) et d'acide acétique (CH₃COOH) a été obtenu lors de dégradation de CH₃CCl₃ indiquant la coupure de liaison C-C.

Ces résultats montrent que ce système catalytique peut être utilisé pour la dégradation de solvants chlorés en les transformant en acides organiques avec déchloruration élevée.

## Revendications

1. Utilisation de catalyseurs de formule générale (I) :
(I) (L₁)M₁-X-M₂(L₂)
dans laquelle :
- M₁ et M₂, identiques ou différents, représentent un atome choisi dans le groupe constitué des métaux de transition ;
- X représente un atome d'azote ;
- L₁ et L₂, identiques ou différents, sont coordinés à M₁ et M₂, respectivement, et représentent des ligands de type tétradentate, répondant à la formule générale (II) : 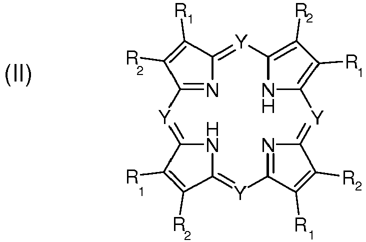 dans laquelle :
- R₁ et R₂ représentent indépendamment l'un de l'autre un groupe choisi dans le groupe constitué de : H, phényle, alkyle et halogène ;
ou bien forment, avec les deux atomes de carbone auxquels ils sont liés, un groupe phényle ou un hétérocycle contenant un ou deux atomes d'azote, éventuellement substitué par un ou plusieurs substituants choisis dans le groupe constitué de halogène, alkyle, alkoxy, nitro, carboxyle, hydroxyle, sulfone, sulfonique et sulfonate ;
- Y représente un atome d'azote ou un groupe CR, où R représente un atome d'hydrogène ou un substituant choisi dans le groupe constitué de : halogène, alkyle, phényle, éventuellement substitué par un ou plusieurs substituants choisis dans le groupe constitué de halogène, alkyle, alkoxy, nitro, carboxyle, hydroxyle, sulfone, sulfonique et sulfonate ;
pour l'oxydation catalytique de composés halogénés.

2. Utilisation selon la revendication 1, dans laquelle l'oxydation est effectuée en présence d'H₂O₂ à titre d'oxydant.

3. Utilisation selon l'une quelconque des revendications 1 ou 2, dans laquelle M₁ et M₂, identiques ou différents, représentent un atomde choisi dans le groupe constitué du fer, du cuivre, du ruthénium, du manganèse, du chrome, du vanadium, de l'osmium et du cobalt.

4. Utilisation selon la revendication 2, dans laquelle :
- M₁ et M₂ représentent tous deux un atome de fer ;
- R₁ et R₂ forment, avec les deux atomes de carbone auxquels ils sont liés, un groupe phényle, éventuellement substitué par un ou plusieurs substituants choisis dans le groupe constitué de halogène, alkyle, alkoxy, nitro, carboxyle, hydroxyle, sulfone, sulfonique et sulfonate ;
- Y représente un atome d'azote.

5. Procédé de traitement d'effluents comprenant des composés halogénés, comprenant l'oxydation des composés halogénés en présence d'un oxydant et d'un catalyseur de formule générale (I)
(I) (L₁)M₁-X-M₂(L₂)
X, M₁, M₂, L₁ et L₂ étant tels que définis dans la revendication 1.

6. Procédé selon la revendication 5, comprenant les étapes suivantes :
(a) mise en présence des effluents, d'un oxydant et d'un catalyseur de formule (I) telle que définie dans la revendication 1 ; et
(b) oxydation catalytique desdits composés halogénés pour obtenir des composés oxydés.

7. Procédé selon l'une quelconque des revendications 5 ou 6, dans lequel l'oxydant est H₂O₂.

8. Procédé selon l'une quelconque des revendications 5 à 7, dans lequel le catalyseur est tel que défini dans la revendication 4.

9. Procédé selon l'une quelconque des revendications 5 à 8, dans lequel les effluents contiennent des composés aromatiques halogénés, de préférence des composés aromatiques fluorés.

10. Procédé selon l'une quelconque des revendications 5 à 9, dans lequel les effluents contiennent des composés aliphatiques halogénés, de préférence des composés aliphatiques chlorés.

11. Procédé selon l'une quelconque des revendications 5 à 10, dans lequel le catalyseur est supporté, de préférence sur de la silice, de l'oxyde d'aluminium ou du charbon.

## Patentansprüche

1. Verwendung von Katalysatoren der allgemeinen Formel (I) :
(I) (L₁)M₁-X-M₂(L₂)
wobei:
- M₁ und M₂, die gleich oder unterschiedlich sind, ein Atom darstellen, das aus der aus Übergangsmetallen gebildeten Gruppe ausgewählt ist,
- X ein Stickstoffatom darstellt,
- L₁ und L₂, die gleich oder unterschiedlich sind, koordinativ an M₁ bzw. M₂ gebunden sind und Liganden des Tetradentat-Typs darstellen, wobei sie der allgemeinen Formel (II) entsprechen: 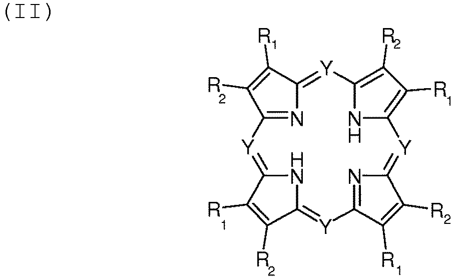 wobei:
- R₁ und R₂ unabhängig voneinander eine Gruppe darstellen, die aus der aus H, Phenyl, Alkyl und Halogen bestehenden Gruppe ausgewählt ist, oder aber mit den beiden Kohlenstoffatomen, an die sie gebunden sind, eine Phenylgruppe oder einen Heterocyclus ausbilden, enthaltend ein oder zwei Stickstoffatome, substituiert gegebenenfalls mit einem oder mehreren Substituenten, die aus der aus Halogen, Alkyl, Alkoxy, Nitro, Carboxyl, Hydroxyl, Sulfon, sulfonisch und Sulfonat gebildeten Gruppe ausgewählt sind,
- Y ein Stickstoffatom oder eine CR-Gruppe darstellt, wobei R ein Wasserstoffatom oder einen Substituenten darstellt, ausgewählt aus der aus Halogen, Alkyl, Phenyl gebildeten Gruppe, gegebenenfalls substituiert mit einem oder mehreren Substituenten, die aus der aus Halogen, Alkyl, Alkoxy, Nitro, Carboxyl, Hydroxyl, Sulfon, sulfonisch und Sulfonat gebildeten Gruppe ausgewählt sind,
für die katalytische Oxidation von halogenierten Verbindungen.

2. Verwendung gemäß Anspruch 1, wobei die Oxidation in Anwesenheit von H₂O₂ als Oxidationsmittel erfolgt.

3. Verwendung gemäß irgendeinem der Ansprüche 1 oder 2, wobei M₁ und M₂, die gleich oder unterschiedlich sind, ein Atom darstellen, das aus der aus Eisen, Kupfer, Ruthenium, Mangan, Chrom, Vanadium, Osmium und Cobalt gebildeten Gruppe ausgewählt ist.

4. Verwendung gemäß Anspruch 2, wobei:
- M₁ und M₂ beide ein Eisenatom darstellen,
- R₁ und R₂ mit den beiden Kohlenstoffatomen, an die sie gebunden sind, eine Phenylgruppe bilden, gegebenenfalls substituiert mit einem oder mehreren Substituenten, die aus der aus Halogen, Alkyl, Alkoxy, Nitro, Carboxyl, Hydroxyl, Sulfon, sulfonisch und Sulfonat gebildeten Gruppe ausgewählt sind,
- Y ein Stickstoffatom darstellt.

5. Verfahren zum Behandeln von Abwässern, die halogenierte Verbindungen aufweisen, aufweisend die Oxidation der halogenierten Verbindungen in Anwesenheit eines Oxidationsmittels und eines Katalysators der allgemeinen Formel (I)
(I) (L₁)M₁-X-M₂(L₂),
wobei X, M₁, M₂, L₁ und L₂ wie in Anspruch 1 definiert sind.

6. Verfahren gemäß Anspruch 5, aufweisend die folgenden Schritte:
(a) Zusammenbringen der Abwässer, eines Oxidationsmittels und eines Katalysators der Formel (I), wie in Anspruch 1 definiert, und
(b) katalytisches Oxidieren der halogenierten Verbindungen, um oxidierte Verbindungen zu erhalten.

7. Verfahren gemäß irgendeinem der Ansprüche 5 oder 6, wobei das Oxidationsmittel H₂O₂ ist.

8. Verfahren gemäß irgendeinem der Ansprüche 5 bis 7, wobei der Katalysator wie in Anspruch 4 definiert ist.

9. Verfahren gemäß irgendeinem der Ansprüche 5 bis 8, wobei die Abwässer aromatische halogenierte Verbindungen, vorzugsweise aromatische fluorierte Verbindungen enthalten.

10. Verfahren gemäß irgendeinem der Ansprüche 5 bis 9, wobei die Abwässer aliphatische halogenierte Verbindungen, vorzugsweise aliphatische chlorierte Verbindungen enthalten.

11. Verfahren gemäß irgendeinem der Ansprüche 5 bis 10, wobei der Katalysator vorzugsweise von Siliciumoxid, von Aluminiumoxid oder von Kohle getragen wird.

## Claims

1. The use of catalysts of general formula (I) :
(I) (L₁)M₁-X-M₂(L₂)
wherein:
- M₁ and M₂, either identical or different, represent an atom selected from the group consisting of transition metals;
- X represents a nitrogen atom;
- L₁ and L₂, either identical or different are coordinated with M₁ and M₂, respectively and represent ligands of the tetradentate type, having the general formula (II): 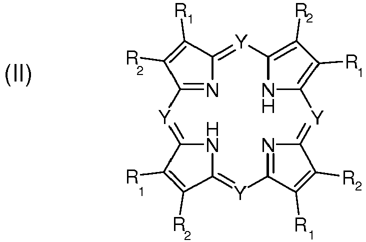 wherein:
- R₁ and R₂ represent independently of each other, a group selected from the group consisting of: H, phenyl, alkyl and halogen;
or else form, with the two carbon atoms to which they are bound, a phenyl group or a heterocycle containing one or two nitrogen atoms, optionally substituted with one or more substituents selected from the group consisting of halogen, alkyl, alkoxy, nitro, carboxyl, hydroxyl, sulfone, sulfonic and sulfonate groups;
- Y represent a nitrogen atom or a group CR, wherein R represents a hydrogen atom or a substituent selected from the group consisting of halogen, alkyl, phenyl groups, optionally substituted with one or several substituents selected from the group consisting of halogen, alkyl, alkoxy, nitro, carboxyl, hydroxyl, sulfone, sulfonic and sulfonate groups;
for catalytic oxidation of halogenated compounds.

2. The use according to claim 1, wherein the oxidation is carried out in the presence of H₂O₂ as an oxidizer.

3. The use according to any of claims 1 or 2, wherein M₁ and M₂, either identical or different, represent an atom selected from the group consisting of transition metals, notably iron, copper, ruthenium, manganese, chromium, vanadium, osmium and cobalt.

4. The use according to claim 2, wherein:
- M₁ and M₂ both represent an iron atom;
- R₁ and R₂ form, with the two carbon atoms to which they are bound, a phenyl group, optionally substituted with one or more substituents selected from the group consisting of halogen, alkyl, alkoxy, nitro, carboxyl, hydroxyl, sulfone, sulfonic and sulfonate groups;
- Y represents a nitrogen atom.

5. A method for treating effluents comprising halogenated compounds comprising the oxidation of the halogenated compounds in the presence of an oxidizer and of a catalyst of general formula (I) :
(I) (L₁)M₁-X-M₂(L₂)
wherein X, M₁, M₂, L₁ and L₂ are as defined in claim 1.

6. The method according to claim 5, comprising the following steps:
(a) putting the effluents, an oxidizer and a catalyst of formula (I) in presence, as defined in claim 1; and
(b) catalytic oxidation of said halogenated compounds in order to obtain oxidized compounds.

7. The method according to any of claims 5 or 6, wherein the oxidizer is H₂O₂.

8. The method according to any of claims 5 to 7, wherein the catalyst is as defined in claim 4.

9. The method according to any of claims 5 to 8, wherein the effluents comprise halogenated aromatic compounds, preferably fluorinated aromatic compounds.

10. The method according to any of claims 5 to 9, wherein the effluents comprise halogenated aliphatic compounds, preferably chlorinated aliphatic compounds.

11. The method according to any of claims 5 to 10, wherein the catalyst is supported, preferably on silica, aluminium oxide or coal.
